# EUROPEAN PATENT APPLICATION

(11) **EP 4 535 384 A1**
(43) Date of publication of application: **09.04.2025**
(21) Application number: 24190382.2
(22) Date of filing: 23.07.2024
(51) Int. Cl.: H01G 4/30, H01G 4/232, H01G 4/012, H01G 4/12

(54) **MULTILAYER ELECTRONIC COMPONENT**

(30) Priority: 04.10.2023 KR 20230131633; 30.11.2023 KR 20230171332; 30.01.2024 KR 20240013673
(71) Applicant: Samsung Electro-Mechanics Co., Ltd., Gyeonggi-do (KR)
(72) Inventor: Byeon, Gyu Tae, Suwon-si, Gyeonggi-do (KR); Shin, Seung Ho, Suwon-si, Gyeonggi-do (KR); Kim, Ji Yeon, Suwon-si, Gyeonggi-do (KR); Jeon, Kyu Oh, Suwon-si, Gyeonggi-do (KR)
(74) Representative: Grünecker Patent- und Rechtsanwälte PartG mbB

(57) **Abstract**

A multilayer electronic component according to an example embodiment of the present disclosure may include: a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; side margin portions disposed on the fifth and sixth surfaces; and external electrodes disposed on the third and fourth surfaces, wherein at least one of both ends of the internal electrodes in the third direction may be spaced apart from the side margin portion.

## Description

### CROSS-REFERENCE TO RELATED APPLICATION(S)

The present application claims the benefit of priority to Korean Patent Application Nos. 10-2023-0131633, 10-2023-0171332, and 10-2024-0013673, filed on October 4, 2023, November 30, 2023, and January 30, 2024, in the Korean Intellectual Property Office, the disclosures of which are incorporated herein by reference in their entirety.

### TECHNICAL FIELD

The present disclosure relates to a multilayer electronic component.

### BACKGROUND

A multilayer ceramic capacitor (MLCC), a multilayer electronic component, is a chip-type condenser mounted on the printed circuit boards of various electronic products, such as image display devices including a liquid crystal display (LCD) and a plasma display panel (PDP), computers, smartphones and mobile phones, serving to charge or discharge electricity therein or therefrom.

The multilayer ceramic capacitor may be used as a component in various electronic devices due to having a small size, ensuring high capacitance and being easily mounted. With the miniaturization and high power output of various electronic devices such as computers and mobile devices, demand for miniaturization and high capacitance of multilayer ceramic capacitors has also been increasing.

Additionally, as industry interest in automotive electrical components has recently increased, a multilayer ceramic capacitor also requires high reliability characteristics for use in automobiles or infotainment systems.

In manufacturing a multilayer ceramic capacitor, a method has been developed to maximize capacitance per unit volume by exposing internal electrodes in the width direction of the body so that an overlapping region of the internal electrodes may be maximized through a margin-free design, and separately attaching the side margin portions to both side surfaces of the body in a width direction to minimize margin portions in the width direction.

However, moisture may easily penetrate between the side margin portion and the body, which may reduce moisture resistance reliability, and when the side margin portion is not properly connected to the body to generate a gap between the side margin portion and the body, there may be concerns that moisture resistance reliability may further deteriorate.

Additionally, during the cutting process so that the internal electrodes are exposed in the width direction of the body, blade chipping, in which a vertical scratch occurs due to a damaged blade, may occur. When blade chipping occurs, a moisture penetration path may be formed from a cover portion to a capacitance formation portion, which may reduce moisture resistance reliability.

Accordingly, a method to improve moisture resistance reliability while improving capacitance per unit volume is needed.

### SUMMARY

An aspect of the present disclosure is to improve reliability of a multilayer electronic component.

An aspect of the present disclosure is to improve capacitance per unit volume of a multilayer electronic component.

An aspect of the present disclosure is to improve bonding force between a side margin portion and a body.

However, the aspects of the present disclosure are not limited to the above-described contents, and may be more easily understood in the process of describing specific embodiments of the present disclosure.

According to an aspect of the present disclosure, a multilayer electronic component may include: a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; side margin portions disposed on the fifth and sixth surfaces of the body, respectively; and external electrodes disposed on the third and fourth surfaces of the body, respectively, in which at least one of two ends of the internal electrodes in the third direction may be spaced apart from the side margin portion and may have an average thickness smaller than an average thickness of a central portion of the internal electrodes in the third direction.

According to an aspect of the present disclosure, a method of manufacturing a multilayer electronic component may include: forming a plurality of conductive patterns arranged in a second direction, perpendicular to the first direction, and a third direction, perpendicular to the first and second directions, on one surface of a ceramic green sheet in the first direction; obtaining a stack body by stacking a plurality of the ceramic green sheets in the first direction; a stack body cutting operation of cutting the stack body in the second direction and the third direction to obtain a plurality of unit chips, wherein during cutting in the third direction, the stack body is cut to include a first internal electrode pattern in which a cut surface of a conductive pattern is exposed to one surface of the unit chip in the second direction and a second internal electrode pattern in which a cut surface of the conductive pattern is exposed to the other surface of the unit chip in the second direction, and when a separation distance between the conductive pattern and an adjacent conductive pattern in the third direction is defined as We, during cutting in the second direction, the stack body is cut within a range of We in the third direction from a center of a region in which the conductive pattern is spaced apart from the adjacent conductive pattern in the third direction, and the stack body is cut so that the conductive pattern is spaced apart from at least one of first and second side surfaces of the unit chip opposing each other in a third direction; and a side margin portion forming operation of attaching a ceramic green sheet for a side margin portion to the first and second side surfaces of the unit chip.

According to an aspect of the present disclosure, a multilayer electronic component may include: a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; side margin portions disposed on the fifth and sixth surfaces of the body, respectively; and external electrodes disposed on the third and fourth surfaces of the body, respectively, in which at least one of two ends of each internal electrode in the active portion in the third direction is spaced apart from the corresponding side margin portion, and when a region between an end of the internal electrodes spaced apart from an adjacent one of the side margin portions and the adjacent one of the side margin portions in the third direction is defined as a margin region, the adjacent one of the side margin portions and the margin region have different compositions from each other.

According to an aspect of the present disclosure, a multilayer electronic component may include: a body including an active portion having a capacitance formed therein by including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; side margin portions disposed on the fifth and sixth surfaces of the body, respectively; and external electrodes disposed on the third and fourth surfaces of the body, respectively, in which at least one of two ends of each internal electrode in the active portion in the third direction is spaced apart from the corresponding side margin portion, and when a region between an end of the internal electrodes spaced apart from an adjacent one of the side margin portions and the adjacent one of the side margin portions in the third direction is defined as a margin region, the adjacent one of the side margin portions and the margin region have different compositions from each other.

One of the various effects of the present disclosure is to improve reliability of a multilayer electronic component.

One of various effects of the present disclosure is to improve the capacitance per unit volume of a multilayer electronic component.

One of various effects of the present disclosure is to improve the adhesive force between a side margin portion and a body.

One of various effects of the present disclosure is to reduce an occurrence of a step portion caused by internal electrodes.

However, advantages and effects of the present disclosure are not limited to the above-described contents, and may be more easily understood in the process of describing specific embodiments of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a perspective view illustrating a body and a side margin portion separated from the multilayer electronic component of FIG. 1 except for an external electrode;
FIG. 3 is a cross-sectional view taken along line I-I' of FIG. 1;
FIG. 4 is a cross-sectional view taken along line II-II' of FIG. 1;
FIG. 5 is a cross-sectional view taken along line III-III' of FIG. 1;
FIG. 6 is an enlarged view of region K1 of FIG. 4;
FIG. 7 is an enlarged view of region K2 of FIG. 4;
FIG. 8 is a view corresponding to FIG. 7 according to another example embodiment;
FIG. 9 is a view corresponding to FIG. 7, according to another example embodiment;
FIG. 10 illustrates a ceramic green sheet on which an internal electrode pattern used for manufacturing a multilayer electronic component according to an example embodiment of the present disclosure is printed;
FIG. 11 is a view illustrating cross-sections in the first and third directions of a stack body in which the ceramic green sheet of FIG. 10 is stacked;
FIG. 12 is a view corresponding to FIG. 4 according to a first modified example;
FIG. 13 is a view corresponding to FIG. 4 according to a second modified example;
FIG. 14 is a view corresponding to FIG. 4 according to a third modified example;
FIG. 15 is a view corresponding to FIG. 4 according to a fourth modified example;
FIG. 16 is a view corresponding to FIG. 4 according to a fifth modified example;
FIG. 17 is a view corresponding to FIG. 4 according to a sixth modified example;
FIG. 18 is a view corresponding to FIG. 4 according to a seventh modified example;
FIG. 19 is a view corresponding to FIG. 4 according to Comparative Example 3;
FIG. 20 is a perspective view schematically illustrating a multilayer electronic component according to Comparative Example 1;
FIG. 21 is a perspective view illustrating a separation of a body and a side margin portion except for an external electrode in the multilayer electronic component of FIG. 20;
FIG. 22 is a cross-sectional view taken along line IV-IV' of FIG. 20;
FIG. 23 is a perspective view schematically illustrating a multilayer electronic component of Comparative Example 2; and
FIG. 24 is a cross-sectional view taken along line V-V' of FIG. 23.

### DETAILED DESCRIPTION

Hereinafter, example embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

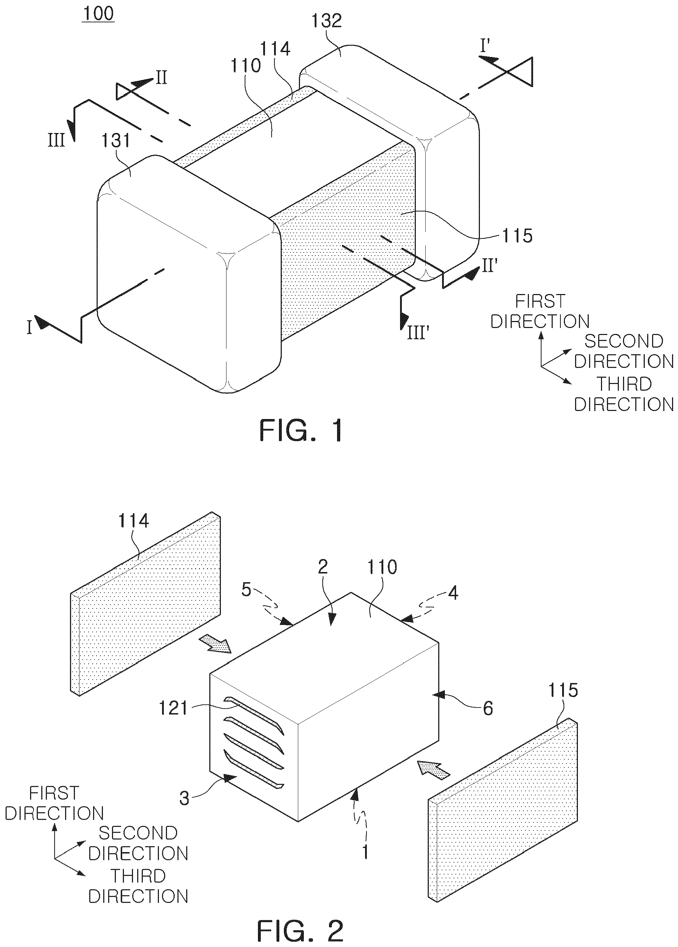

FIG. 1 is a perspective view schematically illustrating a multilayer electronic component according to an example embodiment of the present disclosure.

FIG. 2 is a perspective view illustrating a body and a side margin portion separated from the multilayer electronic component of FIG. 1 except for an external electrode.

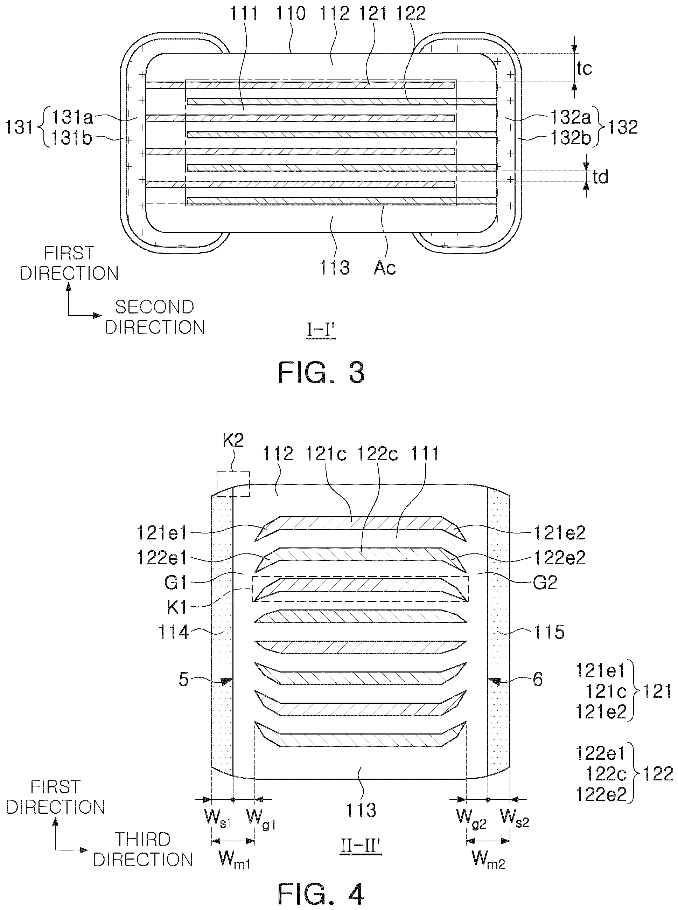

FIG. 3 is a cross-sectional view taken along line I-I' of FIG. 1.

FIG. 4 is a cross-sectional view taken along line II-II' of FIG. 1.

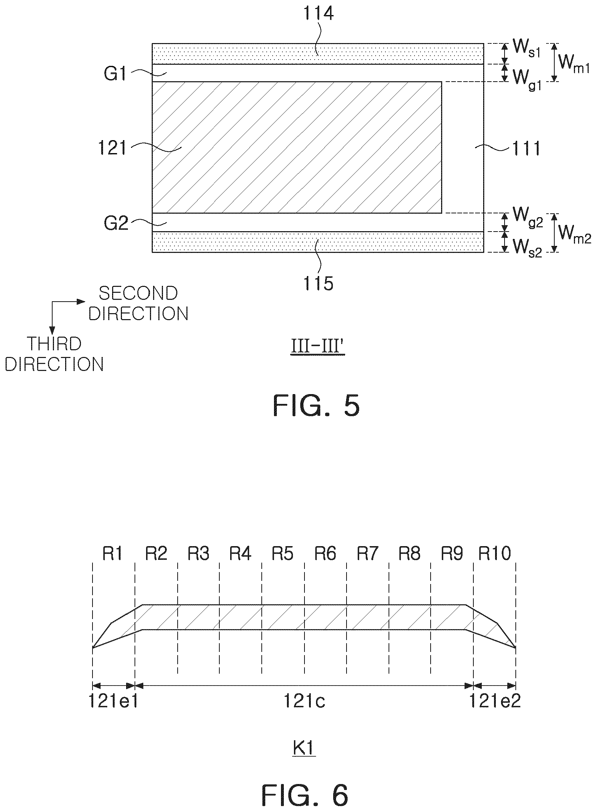

FIG. 5 is a cross-sectional view taken along line III-III' of FIG. 1.

FIG. 6 is an enlarged view of region K1 of FIG. 4.

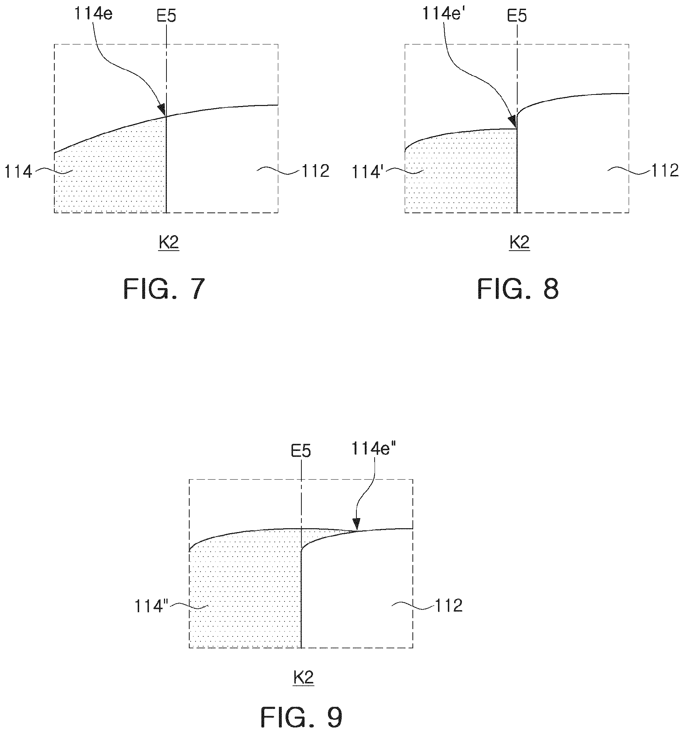

FIG. 7 is an enlarged view of region K2 of FIG. 4.

Hereinafter, referring to FIGS. 1 to 7, a multilayer electronic component according to an example embodiment of the present disclosure will be described in detail.

A multilayer electronic component 100 according to an example embodiment of the present disclosure may include a body including a dielectric layer 111 and internal electrodes 121 and 122 disposed alternately with the dielectric layer in a first direction, and including first and second surfaces 1 and 2 opposing each other in the first direction, third and fourth surfaces 3 and 4 connected to the first and second surfaces and opposing each other in a second direction, and fifth and sixth surfaces 5 and 6 connected to the fourth to fourth surfaces and opposing each other in a third direction; side margin portions 114 and 115 disposed on the fifth and sixth surfaces; and external electrodes 131 and 132 disposed on the third and fourth surfaces, in which at least one of both ends of the internal electrodes in the third direction is spaced apart from the side margin portion and may have an average thickness smaller than an average thickness of a central portion of the internal electrode in the third direction.

In manufacturing a multilayer ceramic capacitor, a method has been developed to maximize capacitance per unit volume by exposing the internal electrodes in the width direction of the body so that an overlapping region of the internal electrodes may be maximized through a margin-free design, and separately attaching the side margin portions to both side surfaces of the body in a width direction to minimize margin portions in the width direction.

However, moisture may easily penetrate between the side margin portion and the body, which may reduce moisture resistance reliability, and when the side margin portion is not properly connected to the body to generate a gap between the side margin portion and the body, there were concerns that moisture resistance reliability may further deteriorate.

Additionally, during the cutting process so that the internal electrodes are exposed in the width direction of the body, blade chipping, in which a vertical scratch occurs due to a damaged blade, may occur. When the blade chipping occurs, a moisture penetration path may be formed from a cover portion to a capacitance formation portion, which may reduce moisture resistance reliability.

According to an example embodiment of the present disclosure, an average thickness of at least one of both ends of internal electrodes 121 and 122 in the third direction may be made smaller than an average thickness of a central portion of the internal electrodes 121 and 122 in the third direction, so that a contact area between side margin portions 114 and 115 and the internal electrodes 121 and 122 may be reduced, or the side margin portions 114 and 115 and the internal electrodes 121 and 122 may be prevented from being in contact with each other, thereby improving adhesive force between the side margin portions 114 and 115 and the body 110 and reducing an occurrence of blade chipping. Accordingly, the humidity resistance reliability of the multilayer electronic component 100 may be improved while the capacitance per unit volume may be improved. Additionally, at least one of both ends of the internal electrodes 121 and 122 in the third direction is arranged to be spaced apart from the side margin portions 114 and 115, so that the moisture resistance reliability may be further improved.

Hereinafter, each configuration included in the multilayer electronic component 100 according to an example embodiment of the present disclosure will be described.

The body 110 may include dielectric layers 111 and internal electrodes 121 and 122 alternately stacked.

There is no particular limitation on a specific shape of the body 110, but as illustrated, the body 110 may have a hexahedral shape or a shape similar thereto. Due to contraction of ceramic powder particles included in the body 110 during a sintering process, the body 110 may not have a hexahedral shape with a completely straight line, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4, and opposing each other in a third direction.

In a state in which a plurality of dielectric layers 111 forming the body 110 are sintered, boundaries between adjacent dielectric layers 111 may be integrated to a degree as to be difficult to identify without using a scanning electron microscope (SEM).

According to an example embodiment of the present disclosure, the materials included in the dielectric layer 111 is not particularly limited as long as sufficient electrostatic capacitance may be obtained. For example, barium titanate-based materials, lead composite perovskite-based materials, or strontium titanate-based materials may be used. The barium titanate-based material may include BaTiO₃-based ceramic powder particles, and examples of the ceramic powder particles may include BaTiO₃, and (Ba₁-ₓCaₓ)TiO₃, Ba(Ti_{1-y}Ca_{y})O₃, (Ba₁₋ₓCaₓ)(Ti_{1-y}Zr_{y})O₃ or Ba(Ti_{1-y}Zr_{y})O₃ which is formed by partially employing calcium (Ca) and zirconium (Zr) in BaTiO₃.

As the material included in the dielectric layer 111, various ceramic additives, organic solvents, binders, dispersants, and the like, may be added to powder particles such as barium titanate (BaTiO₃) according to the purpose of the present disclosure.

Meanwhile, an average thickness td of the dielectric layer 111 does not need to be particularly limited, but may be, for example, 0.05 um to 3.0 um. Additionally, the average thickness td of the dielectric layer 111 may be arbitrarily set, depending on desired characteristics or purposes.

The average thickness td of the dielectric layer 111 may refer to a first directional size of the dielectric layer 111. The average thickness of the dielectric layer 111 may be measured by scanning first and second directional cross-sections of the body 110 with a scanning electron microscope (SEM) of 10,000X magnification. More specifically, an average value may be measured by measuring the thickness at multiple areas of one dielectric layer 111, for example, 30 areas in which are spaced apart from each other at equal intervals in the second direction. The 30 areas with the equal intervals may be designated in a capacitance formation portion Ac. Additionally, when the average value is measured by extending an average value measurement up to 10 dielectric layers 111, the average thickness td of the dielectric layers 111 may be further generalized.

The internal electrodes 121 and 122 may be disposed alternately with the dielectric layer 111.

The internal electrodes 121 and 122 may include first and second internal electrodes 121 and 122. The first and second internal electrodes 121 and 122 may be alternately disposed to face each other with the dielectric layer 111 included in the body 110 interposed therebetween, and may be exposed to the third and fourth surfaces 3 and 4 of the body 110, respectively.

In an example embodiment, the internal electrodes 121 and 122 may include first and second internal electrodes 121 and 122 alternately disposed in the first direction with the dielectric layer 111 interposed therebetween, and the first internal electrode 121 may be connected to the third surface, and the second internal electrode 122 may be connected to the fourth surface.

Referring to FIGS. 2 to 4, the first internal electrode 121 may be spaced apart from the fourth, fifth, and sixth surfaces 4, 5 and 6 and may be exposed through the third surface 3, and the second internal electrode 122 may be spaced apart from the third, fifth, and sixth surfaces 3, 5 and 6 and may be exposed through the fourth surface 4.

In this case, the first and second internal electrodes 121 and 122 may be electrically separated from each other by the dielectric layer 111 disposed in a middle.

The internal electrodes 121 and 122 may include one or more of nickel (Ni), copper (Cu), palladium (Pd), silver (Ag), gold (Au), platinum (Pt), tin (Sn), tungsten (W), and titanium (Ti) and alloys thereof.

The body 110 may include an active portion Ac disposed inside the body 110 and having a capacitance formed therein by including the first internal electrode 121 and the second internal electrode 122 disposed to face each other with the dielectric layer 111 interposed therebetween, and cover portions 112 and 113 formed above and below the active portion Ac in the first direction.

Additionally, the active portion Ac is a portion that contributes to forming the capacitance of a capacitor, and may be formed by repeatedly stacking a plurality of first and second internal electrodes 121 and 122 with the dielectric layer 111 interposed therebetween.

The upper cover portion 112 and the lower cover portion 113 may be formed by stacking a single dielectric layer or two or more dielectric layers in a thickness direction on upper and lower surfaces of the active portion Ac, respectively, and may basically serve to prevent damage to the internal electrode due to physical or chemical stress.

The upper cover portion 112 and the lower cover portion 113 do not include internal electrodes and may include the same material as the dielectric layer 111.

That is, the upper cover portion 112 and the lower cover portion 113 may include a ceramic material, for example, a barium titanate (BaTiO₃)-based ceramic material.

Meanwhile, the thickness of the cover portions 112 and 113 is not particularly limited. However, in order to more easily achieve miniaturization and high capacitance of the multilayer electronic component, the thickness tc of the cover portions 112 and 113 may be 80 µm or less.

An average thickness tc of the cover portions 112 and 113 may refer to a first directional size, and may be a value obtained by averaging the first directional values of the cover portions 112 and 113 measured at five areas spaced apart from each other by equal intervals in an upper portion or a lower portion of the capacitance formation portion Ac.

The side margin portions 114 and 115 may be disposed on the fifth and sixth surfaces of the body 110.

The side margin portions 114 and 115 may include a first side margin portion 114 disposed on the fifth surface 5 of the body 110 and a second side margin portion 115 disposed on the fifth surface 5. That is, the margin portions 114 and 115 may be disposed on both end surfaces of the body 110 in the third direction.

The side margin portions 114 and 115 may be disposed to cover both end surfaces of the cover portions 112 and 113 in the third direction.

The side margin portions 114 and 115 may basically serve to prevent damage to the internal electrodes due to physical or chemical stress.

In an example embodiment, an average thickness of at least one of both ends of the internal electrodes 121 and 122 in the third direction may be smaller than an average thickness of the central portion of the internal electrodes 121 and 122 in the third direction. Accordingly, a contact area between the side margin portions 114 and 115 and the internal electrodes 121 and 122 may be reduced, or the side margin portions 114 and 115 and the internal electrodes 121 and 122 may be prevented from being into contact with each other, thereby improving adhesive force between the side margin portions 114 and 115 and the body 110 and reducing an occurrence of blade chipping. Accordingly, the humidity resistance reliability of the multilayer electronic component 100 may be improved while the capacitance per unit volume may be improved.

In manufacturing a multilayer ceramic capacitor, a method has been developed to maximize capacitance per unit volume by exposing the internal electrodes in the width direction of the body so that an overlapping region of the internal electrodes may be maximized through a margin-free design, and separately attaching the side margin portions to both side surfaces of the body in a width direction to minimize margin portions in the width direction.

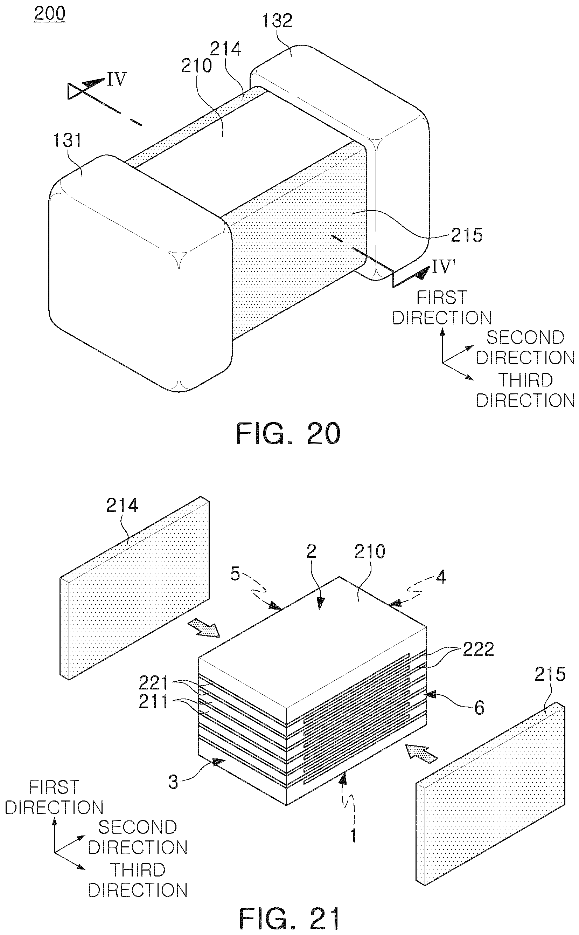

Referring to FIGS. 20 to 22, which are drawings of the multilayer electronic component 200 of Comparative Example 1 manufactured by this method, since the multilayer electronic component 200 according to Comparative Example 1 had no step portion due to the internal electrodes 221 and 222, the internal electrodes 221 and 222 were able to have a constant thickness in the third direction. Additionally, the internal electrodes 221 and 222 were exposed to the fifth and sixth surfaces of the body 210 and were in contact with the side margin portions 214 and 215.

However, moisture may easily penetrate between the side margin portions 214 and 215 and the body 210, which may reduce moisture resistance reliability, and when the side margin portions 214 and 215 are not properly connected to the body 210 to generate a gap between the side margin portions 214 and 215 and the body 210, the moisture resistance reliability may further deteriorate. Additionally, during the cutting process to expose the internal electrodes 221 and 222 in the width direction of the body, blade chipping, in which a vertical scratch occurs due to a damaged blade, may occur. When the blade chipping occurs, a moisture penetration path may be formed from the cover portions 212 and 213 to the capacitance formation portion Ac, which may reduce moisture resistance reliability.

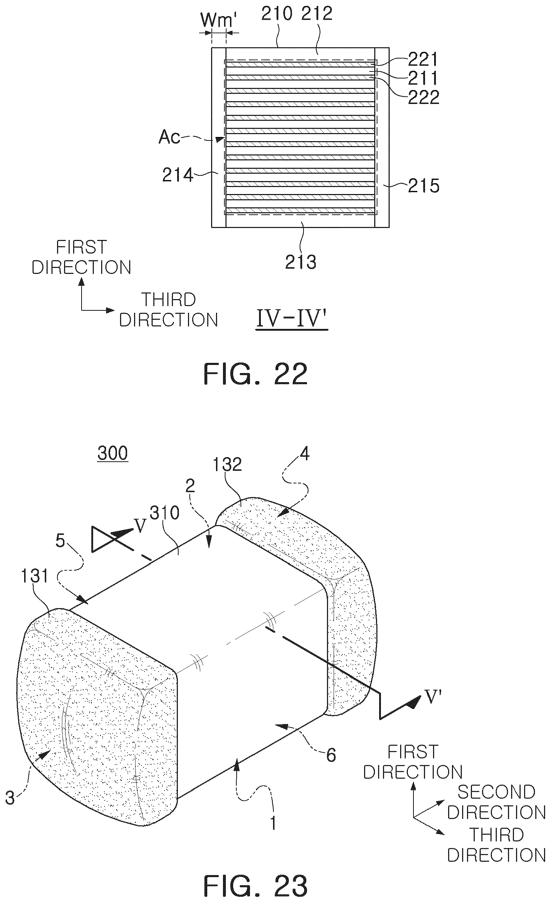

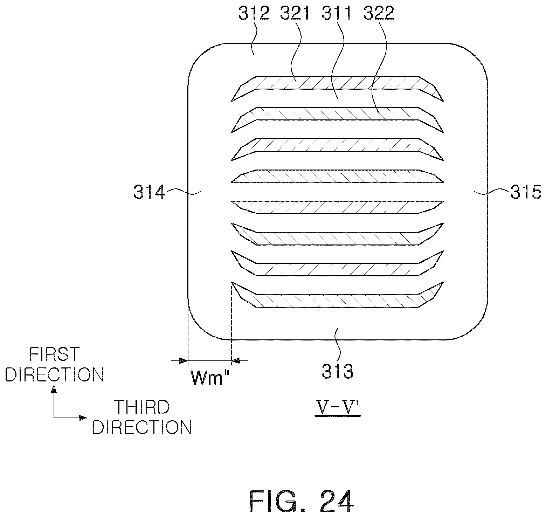

On the other hand, referring to FIGS. 23 and 24, which is drawings of Comparative Example 2 manufactured by a conventional manufacturing method of forming the internal electrode by applying a conductive paste except for a region in which the margin portion is to be formed on the ceramic green sheet without separately attaching the side margin portion, in order to sufficiently protect the internal electrodes 321 and 322 from the outside, because a width Wm" of the margin portions 314 and 315 had to be made large, the capacitance per unit volume may be reduced, and in a process of stacking ceramic green sheets, a significant amount of step portions in a height direction may occur as a difference in height between an unprinted portion and a printed portion of the internal electrodes 321 and 322 accumulates. These step portions may bend an end of each sheet to generate stress, which may cause defects such as delamination in which a gap between layers is present.

On the other hand, according to an example embodiment of the present disclosure, since separate side margin portions 114 and 115 are disposed on the body 110, unlike Comparative Example 2, even if widths Wg1 and Wg2 of margin regions G1 and G2 within the body 110 are reduced, the internal electrodes 321 and 322 may be sufficiently protected from the outside, and widths Wm1 and Wm2 of an entire margin portion which is the sum of the widths Wg1 and Wg2 of the margin regions G1 and G2 in the body 110 and the widths Ws1 and Ws2 of the side margin portions 114 and 115 may be made smaller than the width Wm" of the margin portions 314 and 315 of Comparative Example 2, thereby improving the capacitance per unit volume.

According to an example embodiment of the present disclosure, as the margin regions G1 and G2 are present within the body 110, an occurrence of blade chipping that may occur in Comparative Example 1 may be reduced, and moisture penetration may be prevented by improving the adhesive force between the side margins 114 and 115 and the body 110. Additionally, even if moisture penetrates between the side margin portions 114, 115 and the body 110, since the margin regions G1 and G2 are present, it may be difficult for moisture to reach the internal electrodes 121 and 122, thereby improving the moisture resistance reliability. Additionally, according to a modified example of the present disclosure, even when one of both ends of the internal electrodes is in contact with the side margin portion, since a thickness of both ends of the internal electrodes is thin, the bonding force between the side margin portion and the body may be greater than that of Comparative Example 1, which may be advantageous in securing moisture resistance reliability.

That is, according to an example embodiment of the present disclosure, while securing higher humidity resistance reliability than Comparative Example 1, the capacitance per unit volume may be improved as compared to Comparative Example 2.

Referring to FIG. 6, when the first internal electrode 121 is divided into 10 regions having equal intervals in the third direction, which are defined as first to tenth regions R1 to R10, respectively, both ends 121e1 and 121e2 of the first internal electrode 121 may be a first region R1 and a tenth region R10, and a central portion 121c of the first internal electrode 121 may be second to ninth regions R2 to R9. Both ends 122e1 and 122e2 and the central portion 122c of the second internal electrode 122 may be identified in the same manner.

As an example of a specific measurement method, an average thickness of both ends and an average thickness of the central portion of the internal electrodes 121 and 122 may be measured by scanning first and third directional cross-sections cut from the center of the body 110 in the second direction with a scanning electron microscope (SEM). After selecting one internal electrode from the scanned image, the selected internal electrode may be divided into 10 regions having equal intervals in the third direction, which are defined as first to tenth regions, respectively, and a value obtained by averaging thicknesses of the internal electrode at five areas spaced apart from each other by equal intervals in the first region may be defined as an average thickness of one end of the internal electrodes 121 and 122, a value obtained by averaging thicknesses of the internal electrode at five areas spaced apart from each other by equal intervals in the tenth region may be defined as an average thickness of the other end of the internal electrodes 121 and 122, and an average value of the average thickness of one end of the internal electrodes 121 and 122 and the average thickness of the other end of the internal electrodes 121 and 122 may be an average thickness of both ends of the internal electrodes 121 and 122. Additionally, a value obtained by averaging thicknesses of the internal electrode at 10 areas spaced apart from each other by equal intervals in the second to nineth regions may be determined as an average thickness of the central portion of the internal electrodes 121 and 122.

Meanwhile, when the average value is measuring after performing the average thickness measurement on 10 internal electrodes 121 and 122, the average thickness of both ends and the average thickness of the central portion of the internal electrodes 121 and 122 may be further generalized.

In an example embodiment, a ratio of the average thickness of both ends of the internal electrodes 121 and 122 to the average thickness of the central portion of the internal electrodes 121 and 122 may be 0.90 or less. Accordingly, the effect of improving the adhesive force between the side margin portions 114 and 115 and the body 110 and the effect of reducing the occurrence of blade chipping may be further improved. Additionally, a ratio of the average thickness of both ends of the internal electrodes 121 and 122 to the average thickness of the central portion of the internal electrodes 121 and 122 may be, more preferably, 0.80 or less, and even more preferably 0.70 or less.

The average thickness of the central portion of the internal electrodes 121 and 122 does not need to be particularly limited, but may be, for example, 0.05 um to 3.0 µm.

In an example embodiment, at least one of both ends of the internal electrodes 121 and 122 may have a shape bent toward the center of the body in the first direction. Accordingly, at least one of both ends of the internal electrodes 121 and 122 may be disposed to be closer to the center of the body in the first direction than the central portion of the internal electrodes 121 and 122.

The average widths Wm1 and Wm2 in the third direction from both ends of the internal electrodes 121 and 122 in the third direction to the outside of the adjacent side margin portions 114 and 115 does not need to be particularly limited. However, the average widths Wm1 and Wm2 in the third direction to the outside of adjacent side margin portions 114 and 115 from both ends in the third direction of the internal electrodes 121 and 122 which may more significantly improve the capacitance per unit volume while securing the moisture resistance reliability of the multilayer electronic component according to the present disclosure may be 20 um or more and 55 µm or less.

Meanwhile, in the case of Comparative Example 1, a width Wm' of the side margin portions 214 and 215 to maximize the capacitance per unit volume is 20 µm or less, and in the case of Comparative Example 2, a width Wm" of the margin portions 314 and 315 to stably secure moisture resistance reliability is 50 µm or more. Accordingly, Wm1 and Wm2 may be larger than the width Wm' of the side margin portions 214 and 215 of Comparative Example 1, but may be smaller than the width Wm" of the margin portions 314 and 315 of Comparative Example 2. Additionally, when Wm1 and Wm2 are equal to the width Wm' of the side margin portions 214 and 215 of Comparative Example 1, the capacitance per unit volume is the same as Comparative Example 1, but the moisture resistance reliability may be better than in Comparative Example 1.

Referring to FIG. 4, Wm1 may be the sum of a separation distance Wg1 between one end 121e1 or 122e1 of the internal electrode and the fifth surface and the width Ws1 of the first side margin, and Wm2 may be the sum of a separation distance Wg2 between the other end 121e2 or 122e2 of the internal electrode and the sixth surface and the width Ws2 of the second side margin. Wm1 and Wm2 may be measured from the first and third directional cross-sections cut from the center of the multilayer electronic component 100 in the second direction, and may be a value obtained by averaging values measured at five areas spaced apart from each other by equal intervals in the first direction.

The average widths Ws1 and Ws2 of the side margin portions 114 and 115 in the third direction do not need to be particularly limited. For example, each of Ws1 and Ws2 may be 50 µm or less, and for miniaturization and high capacitance, each of Ws1 and Ws2 may be 20 µm or less. Here, a third directional width of the side margin portions 114 and 115 may refer to a third directional size of the side margin portions 114 and 115.

Meanwhile, according to an example embodiment of the present disclosure, since a margin in the width direction may also exist within the body 110, the third directional width of the side margin portions 114 and 115 may be thinned to improve capacitance per unit volume while securing humidity resistance reliability. For example, when the average widths Ws1 and Ws2 of the side margin portions 114 and 115 in the third direction is 15 µm or less, the effect of improving capacitance per unit volume while securing the moisture resistance reliability of the multilayer electronic component according to the present disclosure may be more significantly achieved.

Meanwhile, widths of the side margin portions 114 and 115 for each position in the first direction may be substantially the same, and a deviation of the width may be within 5%. This may be due to forming the side margin portions 114 and 115 by attaching the ceramic green sheet for the side margin portion to a side surface of the body 110.

In an example embodiment, at least one of both ends of the internal electrodes 121 and 122 in the third direction may be spaced apart from the side margin portions 114 and 115.

In this case, both ends of the internal electrodes 121 and 122 in the third direction may be spaced apart from the side margin portions 114 and 115. Accordingly, the bonding force between the side margin portions 114 and 115 and the body 110 may be further improved. This is because the side margin portions 114 and 115 have greater bonding force with the dielectric layer 111 than that with the internal electrodes 121 and 122. Additionally, as both ends of the internal electrodes 121 and 122 in the third direction are spaced apart from the side margin portions 114 and 115, even if moisture penetrates between the side margins 114 and 115 and the body 110, it may be difficult to reach the internal electrode, thereby further improving moisture resistance reliability. Additionally, an occurrence of blade chipping that may occur in a cutting process may be suppressed.

However, the present disclosure is not limited to a form in which both ends of the internal electrodes 121 and 122 in the third direction are spaced apart from the side margins 114 and 115, and as a modified example described below, at least one end of both ends of the internal electrodes 121 and 122 in the third direction may be in contact with the side margin portion.

In an example embodiment, when an end closer to the fifth surface of the body 110 is defined as the first end 121e1 or 122e1 and an end closer to the sixth surface of the body 110 is defined as the second end 121e2 or 122e2, among both ends of the internal electrodes 121 and 122 in the third direction, a sum of a distance Wg1 between the first end 121e1 or 122e1 and the fifth surface and a distance Wg2 between the second end 121e2 or 122e2 and the sixth surface may be 15 um or more. The sum of Wg1 and Wg2 may be set to 15µm or more, thereby further improving the moisture resistance reliability improvement effect according to the present disclosure.

Meanwhile, an upper limit of the sum of Wg1 and Wg2 does not need to be particularly limited, but the upper limit thereof may be 82um or less. In order to further improve a capacitance improvement effect per unit volume according to the present disclosure, the sum of Wg1 and Wg2 may be 60 um or less.

Meanwhile, the side margin portions 114 and 115 may be formed by stacking a single dielectric layer or two or more dielectric layers on both end surfaces of the body 110 in the third direction. The side margin portions 114 and 115 may have a different composition from the dielectric layer 111, may have a different grain size from the dielectric layer 111, and may have a different porosity from the dielectric layer 111. However, the present disclosure is not limited thereto, and the side margin portions 114 and 115 may have the same composition as the dielectric layer 111.

In an example embodiment, when a region between both ends of the internal electrodes in the third direction, which are spaced apart from the side margin portion, and the side margin portion is defined as margin regions G1 and G2, the side margin portions 114 and 115 and the margin regions G1 and G2 may have different compositions.

In this case, the number of moles of a Mg content relative to 100 moles of Ti included in the side margin portions 114 and 115 may be higher than the number of moles of the Mg content relative to 100 moles of Ti included in the margin regions G1 and G2. Accordingly, the adhesive force of the side margin portions 114 and 115 to the body 110 may be further improved, and the capacity per unit volume may be further improved.

In an example embodiment, when regions between both ends of the internal electrodes 121 and 122 in the third direction, which are spaced apart from the side margin portions 114 and 115, and the side margin portions 114 and 115 are defined as the margin regions G1 and G2, an average size of the dielectric grains included in the side margin portions 114 and 115 may be smaller than an average size of the dielectric grains included in the margin regions G1 and G2. Accordingly, the adhesive force of the side margin portions 114 and 115 to the body 110 may be further improved, and the capacitance per unit volume may be further improved.

In an example embodiment, when the average size of the dielectric grains adjacent to an end spaced apart from the side margin portions 114 and 115, among both ends of the internal electrodes 121 and 122 in the third direction, is defined as Gs1, the average size of dielectric grains adjacent to the central portion of the internal electrodes 121 and 122 is defined as Gs2, and the average size of dielectric grains in a region adjacent to the outer surface of the side margin portions 114 and 115 is defined as Gs3, a difference between Gs1 and Gs2 may be smaller than a difference between Gs1 and Gs3. In this case, Gs1 and Gs2 may be substantially the same, and Gs3 may be smaller or larger than Gs1 and Gs2. For a more specific example, Gs1 may be 0.95 to 1.05 times Gs2, Gs3 may be greater than 1.1 times or less than 0.9 times greater than Gs1. This may be because the ceramic sheet for forming the side margin portions 114 and 115 and the ceramic sheet for forming the dielectric layer 111 of the body 110 have different compositions.

Referring to FIG. 7, one end 114e of the first side margin portion 114 may meet one end of the fifth surface in the first direction and may be connected to the second surface of the body 110. Additionally, the other end of the first side margin portion 114 may meet the other end of the fifth surface in the first direction and may be connected to the first surface of the body 110. Similarly, one end of the second side margin portion 115 may meet one end of the sixth surface in the first direction and may be connected to the second surface of the body 110, and the other end of the first side margin portion 114 may meet the other end of the sixth surface in the first direction and may be connected to the first surface of the body 110.

However, in consideration of manufacturing errors in the side margin portion, and the like, one end of the first side margin portion does not necessarily have to have the shape as the example embodiment of FIG. 7.

For example, according to another example embodiment of the present disclosure, as illustrated in FIG. 8, an end 114e' of a first side margin portion 114' may be disposed on the fifth surface, and the first side margin portion 114' may be disposed not to cover a portion of the fifth surface. Similarly, an end of the second side margin may be disposed on the sixth surface, and the second side margin may be disposed not to cover a portion of the sixth surface. Accordingly, according to another embodiment of the present disclosure, the first side margin portion 114' may be disposed so as not to meet an extension line E5 of the fifth surface, and the second side margin may be disposed so as not to meet an extension line of the sixth surface. Additionally, as illustrated in FIG. 8, a step portion may occur in boundaries of the body 110 as the first side margin portion 114' covers only a portion of the fifth surface.

Additionally, according to another example embodiment of the present disclosure, at least a portion of side margin portions 114" and 115'' may be disposed on the first and second surfaces. Referring to FIG. 8, one end 114e" of the first side margin portion 114" may be disposed on the second surface. In this case, the other end of the first side margin portion 114" may be disposed on the first surface, and one end of the second side margin portion may be disposed on the second surface, and the other end of the second side margin portion may be disposed on the first surface.

The external electrodes 131 and 132 may be disposed on the third surface 3 and the fourth surface 4 of the body 110.

The external electrodes 131 and 132 may include first and second external electrodes 131 and 132 disposed on the third and fourth surfaces 3 and 4 of the body 110, respectively, and connected to the first and second internal electrodes 121 and 122, respectively.

Referring to FIG. 1, the external electrodes 131 and 132 may be disposed to cover both end surfaces of the side margin portions 114 and 115 in the second direction.

In this example embodiment, a structure in which the multilayer electronic component 100 has two external electrodes 131 and 132 is described, but the number or shape of the external electrodes 131 and 132 may be changed depending on the shape of the internal electrodes 121 and 122 or other purposes.

In an example embodiment, the external electrodes 131 and 132 include a first external electrode 131 disposed on the third surface of the body 110 and a second external electrode 132 disposed on the fourth surface of the body 110, and the first external electrode 131 may cover one end of the side margin portions 114 and 115 in the second direction, and the second external electrode 132 may cover the other end of the side margin portions 114 and 115 in the second direction.

Meanwhile, the external electrodes 131 and 132 may be formed using any material as long as the material has electrical conductivity, such as metals, and the specific material may be determined in consideration of electrical properties, structural stability, and the like, and the external electrodes 131 and 132 may further have a multilayer structure.

For example, the external electrodes 131 and 132 may include electrode layers 131a and 132a disposed on the body 110 and plating layers 131b and 132b formed on the electrode layers 131a and 132a.

For more specific examples of the electrode layers 131a and 132a, the electrode layers 131a and 132a may be fired electrodes including conductive metals and glass, or may be resin-based electrodes including conductive metals and a resin.

Additionally, the electrode layers 131a and 132a may be formed by sequentially forming a fired electrode and a resin-based electrode on a body. Additionally, the electrode layers 131a and 132a may be formed by transferring a sheet including the conductive metal onto the body, or may be formed by transferring a sheet including the conductive metal onto the fired electrode.

As the conductive metal included in the electrode layers 131a and 132a, a material having excellent electrical conductivity may be used and is not particularly limited. For example, the conductive metal may be one or more of nickel (Ni), copper (Cu), and alloys thereof.

The plating layers 131b and 132b serve to improve mounting characteristics. The type of plating layers 131b and 132b is not particularly limited, and may be plating layers including one or more of Ni, Sn, Pd, and alloys thereof, and may be formed of a plurality of layers.

For more specific examples of the plating layers 131b and 132b, the plating layers 131b and 132b may be Ni plating layers or Sn plating layers, and may be in the form in which a Ni plating layer and a Sn plating layer are sequentially formed on the electrode layers 131a and 132a, or may be in the form in which the Sn plating layer, the Ni plating layer, and the Sn plating layer are formed sequentially. Additionally, the plating layers 131b and 132b may include a plurality of Ni plating layers and/or a plurality of Sn plating layers.

The size of the multilayer electronic component 100 does not need to be particularly limited.

However, in order to achieve both miniaturization and high capacitance, since the thickness of the dielectric layer and internal electrode must be thinned to increase the number of stacks, the reliability improvement effect according to the present disclosure may be more remarkable in the multilayer electronic component 100 having a size of 1005 (length × width, 1.0 mm × 0.5 mm) or less.

In consideration of manufacturing errors, a size of the external electrode, and the like, when a length of the multilayer electronic component 100 is 1.1 mm or less and a width thereof is 0.55 mm or less, the effect of improving reliability and capacitance per unit volume according to the present disclosure may be more remarkable. Here, the length of the multilayer electronic component 100 may refer to a maximum size of the multilayer electronic component 100 in the second direction, and the width of the multilayer electronic component 100 may refer to a maximum size of the multilayer electronic component 100 in the third direction.

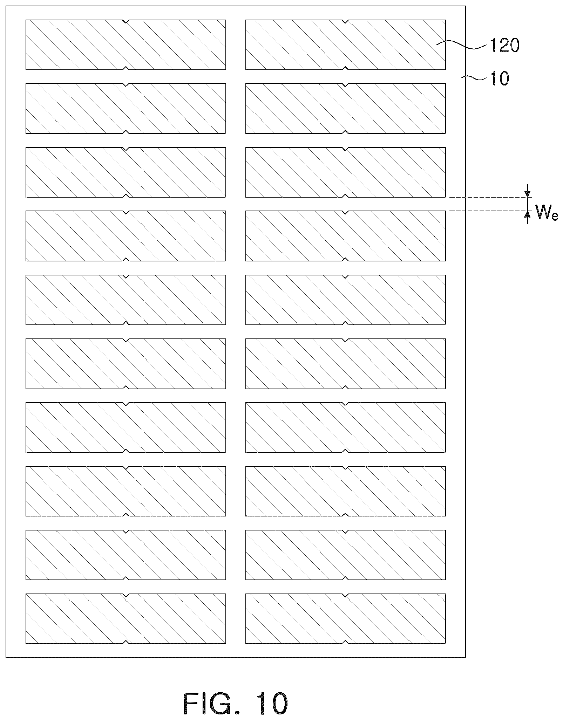

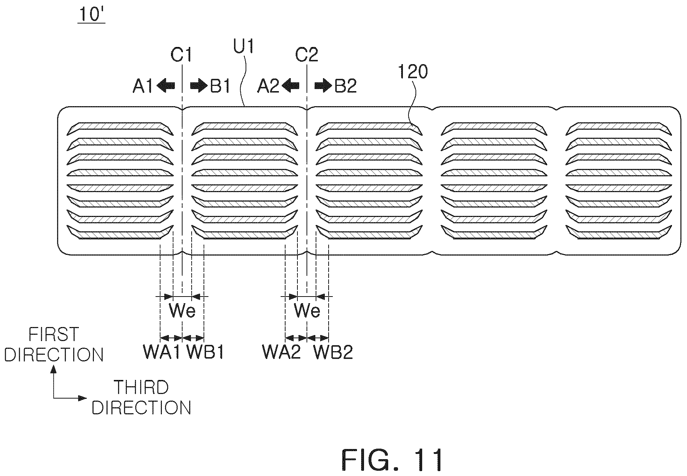

FIG. 10 illustrates a ceramic green sheet 10 on which a conductive pattern 120 is printed, which is used to manufacture a multilayer electronic component according to an example embodiment of the present disclosure. FIG. 11 illustrates first and third cross-sections of a stack body 10' in which the ceramic green sheets of FIG. 10 are stacked.

Referring to FIGS. 10 and 11, a multilayer electronic component according to a modified example of the present disclosure will be described.

First, after printing a plurality of conductive patterns 120 on the ceramic green sheet 10 as illustrated in FIG. 10, a plurality of ceramic green sheets 10 are stacked and compressed to form the stack body 10'.

Then, referring to FIG. 11, a body U1 of a unit chip may be obtained by cutting the stack body 10' by selecting reference cutting lines C1 and C2 in a center of a region in which the conductive pattern is spaced apart from an adjacent conductive pattern in the third direction. When cutting the stack body 10' according to the reference cutting lines C1 and C2 of FIG. 10, the internal electrodes 121 and 122 may be spaced apart from the fifth and sixth surfaces of the body, and the internal electrodes 121 and 122 may be spaced apart from the side margin portions 114 and 115.

Then, when one or more dielectric sheets for the side margin portion are attached to the fifth and sixth surfaces of the body as illustrated in FIG. 2, both ends of the internal electrodes may be disposed to be spaced apart from the side margin portion.

Then, after proceeding with a sintering process, a multilayer electronic component may be obtained by forming external electrodes 131 and 132 on the third and fourth surfaces of the body 110.

On the other hand, when dispersion in the cutting process occurs, the stack body 10' may not be cut exactly according to the reference cutting lines C1 and C2, and may be cut on the left A1 or on the right B1 of the first reference cutting line C1, and may be cut on the left A2 or on the right B2 of the second reference cutting line C2.

Depending on the distribution of the cutting process, the multilayer electronic component according to an example embodiment of the present disclosure may have various forms as described below.

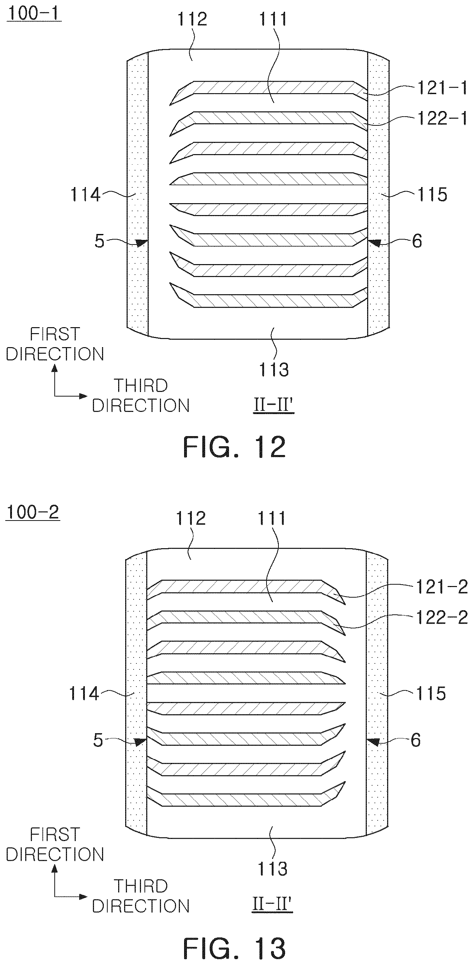

FIG. 12 is a view corresponding to FIG. 4 according to a first modified example. When cut on the first reference cutting line C1 and the left A2 of the second reference cutting line C2, as illustrated in FIG. 12, a multilayer electronic component 100-1 may be obtained in which internal electrodes 121-1 and 122-1 are spaced apart from the fifth surface but exposed to the sixth surface and are in contact with the second side margin portion 115. Accordingly, when an end closer to the fifth surface is referred to a first end, among both ends of the internal electrodes 121-1 and 122-1 in the third direction, and an end closer to the sixth surface is defined as a second end, the first end may be spaced apart from the fifth surface, and the second end may be disposed to contact the sixth surface. In this case, a separation distance between the first end and the fifth surface may be 5 um or more.

FIG. 13 is a view corresponding to FIG. 4 according to a second modified example. When cut on the right B1 of the first reference cutting line C1 and the second reference cutting line C2, as illustrated in FIG. 13, a multilayer electronic component 100-2 may be obtained in which the internal electrodes 121-2 and 122-2 are spaced apart from the sixth surface but are exposed to the fifth surface and in contact with the first side margin portion 114.

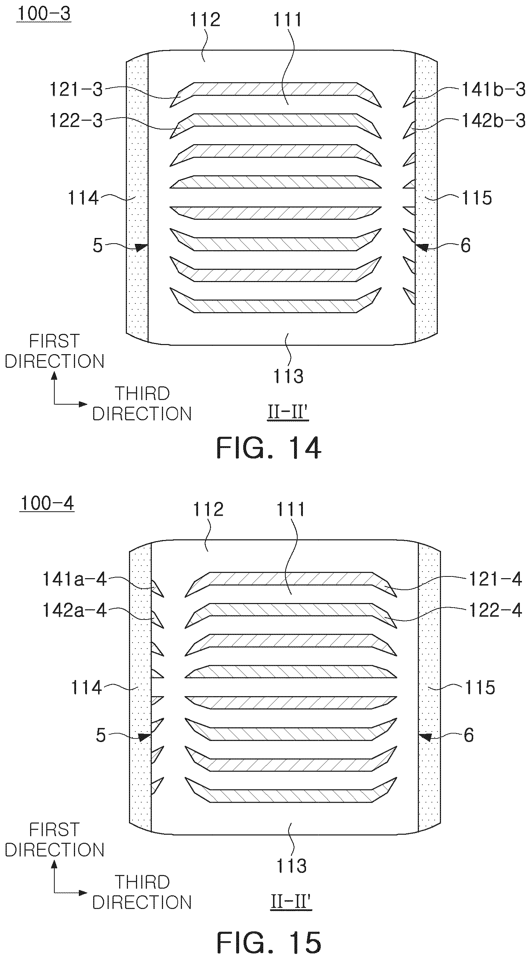

FIG. 14 is a view corresponding to FIG. 4 according to a third modified example. When cut on the first reference cutting line C1 and the right B2 of the second reference cutting line C2, as illustrated in FIG. 14, the internal electrodes 121-3 and 122-3 may be spaced apart from the fifth and sixth surfaces, but a portion of an adjacent conductive pattern may be included in the body. Accordingly, a multilayer electronic component 100-3 may include second additional patterns 141b-3 and 142b-3 in contact with the sixth surface and spaced apart from the second end.

FIG. 15 is a view corresponding to FIG. 4 according to a fourth modified example. When cut on the left A1 of the first reference cutting line C1 and the second reference cutting line C2, as illustrated in FIG. 15, the internal electrodes 121-4 and 122-4 may be spaced apart from the fifth and sixth surfaces, but a portion of the adjacent conductive pattern may be included in the body. Accordingly, a multilayer electronic component 100-4 may include first additional patterns 141a-4 and 142a-4 in contact with the fifth surface and spaced apart from the first end.

As illustrated in FIGS. 14 and 15, according to an example embodiment of the present disclosure, both ends of the internal electrodes in the third direction may be spaced apart from the side margin portion, and when an end closer to the fifth surface is defined as a first end and an end closer to the sixth surface is defined as a second end, among both ends of the internal electrodes in the third direction, the body may include at least one of a first additional pattern in contact with the fifth surface and spaced apart from the first end and a second additional pattern in contact with the sixth surface and spaced apart from the second end.

In this case, an end closer to the first end among both ends of the first additional pattern in the third direction, an end closer to the second end among both ends of the second additional pattern in the third direction, and the first end and the second end of the internal electrode may have a shape bent toward the center of the body in the first direction.

Additionally, a thickness of a portion of the first additional pattern in contact with the fifth surface may be larger than a thickness of an end closer to the first end, and a thickness of a portion of the second additional pattern in contact with the sixth surface may be larger than a thickness of the end closer to the second end.

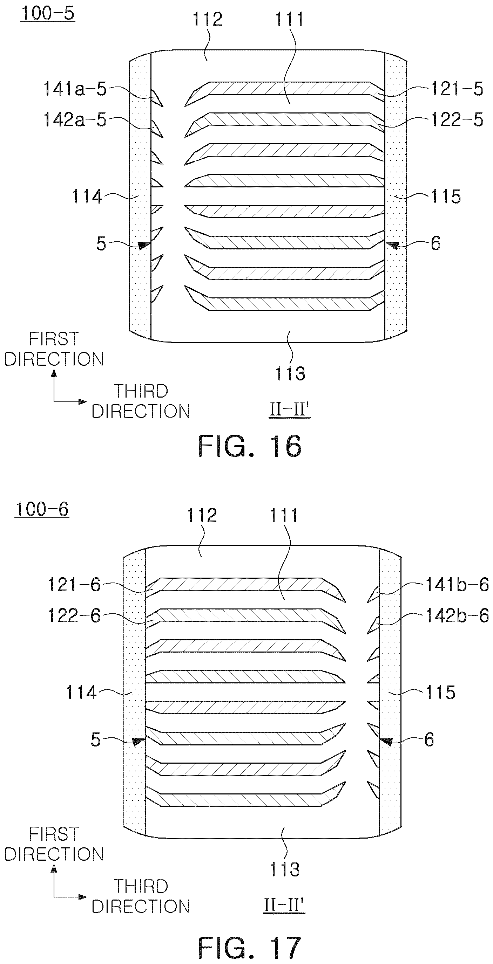

FIG. 16 is a view corresponding to FIG. 4 according to a fifth modified example. When cut on the left A1 of the first reference cutting line C1 and on the left A2 of the second reference cutting line C2, as illustrated in FIG. 16, the internal electrodes 121-5 and 122-5 may be spaced apart from the fifth surface but in contact with the sixth surface, and a portion of the adjacent conductive pattern may be included in the body. Accordingly, a multilayer electronic component 100-5 may include first additional patterns 141a-5 and 142a-5 in contact with the fifth surface and spaced apart from the first end.

Accordingly, when an end closer to the fifth surface is defined as a first end and an end closer to the sixth surface is defined as a second end, among both ends of the internal electrodes 121-5 and 122-5 in the third direction, the first end may be spaced apart from the fifth surface, and the second end may be in contact with the sixth surface, and the body may further include first additional patterns 141a-5 and 142a-5 in contact with the fifth surface and spaced apart from the first end.

In this case, a separation distance between the first end and the first additional patterns 141a-5 and 142a-5 may be 15 um or more.

Additionally, an end closer to the first end among both ends of the first additional patterns 141a-5 and 142a-5 in the third direction, and the first end of the internal electrode may have a shape bent toward the center of the body in the first direction. Additionally, a thickness of a portion of the first additional patterns 141a-5 and 142a-5 in contact with the fifth surface may be larger than a thickness of an end closer to the first end.

FIG. 17 is a view corresponding to FIG. 4 according to a sixth modified example. When cut on the right B1 of the first reference cutting line C1 and on the right B2 of the second reference cutting line C2, as illustrated in FIG. 16, internal electrodes 121-6 and 122-6 may be in contact with the fifth surface but may be spaced apart from the sixth surface, and a portion of an adjacent conductive pattern may be included in the body. Accordingly, a multilayer electronic component 100-6 may include second additional patterns 141b-6 and 142b-6 in contact with the sixth surface and spaced apart from the second end.

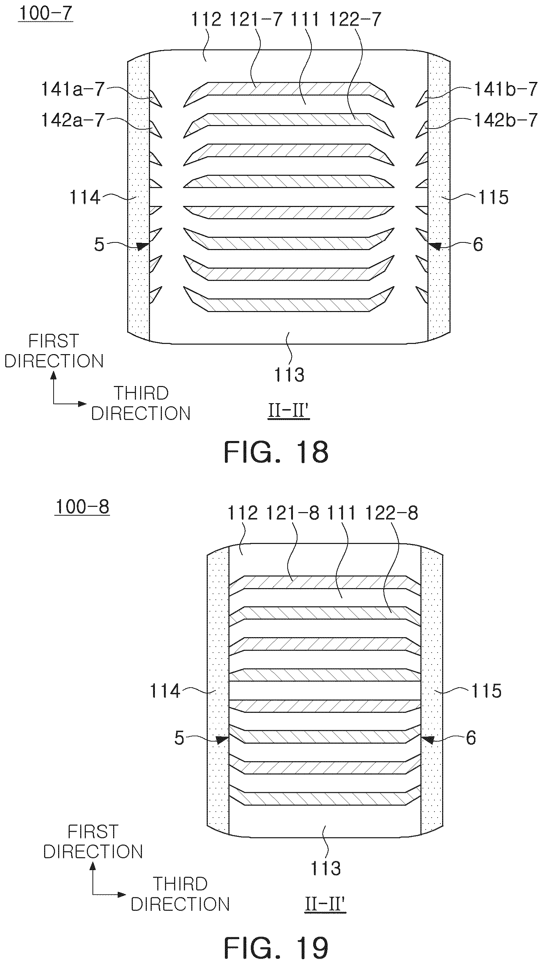

FIG. 18 is a view corresponding to FIG. 4 according to a seventh modified example. When cut on the left A1 of the first reference cutting line C1 and on the right B2 of the second reference cutting line C2, as illustrated in FIG. 17, internal electrodes 121-7 and 122-7 may be spaced apart from the fifth and sixth surfaces, and a portion of the adjacent conductive pattern may be included in the body. Accordingly, the multilayer electronic component 100-7 may include first additional patterns 141a-7 and 142a-7 in contact with the fifth surface and spaced apart from the first end, and may include second additional patterns 141b-7 and 142b-7 in contact with the sixth surface and spaced apart from the second end.

FIG. 19 is a view corresponding to FIG. 4 according to Comparative Example 3. When cut on the right B1 of the first reference cutting line C1 and on the left A2 of the second reference cutting line C2, as illustrated in FIG. 18, internal electrodes 121-8 and 122-8 may be in contact with the fifth and sixth surfaces. Accordingly, both ends of the internal electrodes 121-8 and 122-8 in the third direction may be disposed to contact the side margin portions 114 and 115. This case may have a similar form to Comparative Example 1, and as both ends of the internal electrodes may be disposed to contact the side margin portions 114 and 115, and thus, there may be concerns that moisture resistance reliability may be reduced. On the other hand, according to an example embodiment of the present disclosure, at least one of both ends of the internal electrodes 121 and 122 in the third direction may be spaced apart from the side margin portions 114 and 115, thereby improving moisture resistance reliability.

### Method of Manufacturing Multilayer Electronic Component

A method of manufacturing a multilayer electronic component according to an example embodiment of the present disclosure may include: forming a plurality of conductive patterns 120 arranged in a second direction, perpendicular to a first direction, and a third direction, perpendicular to the first and second directions, on one surface of a ceramic green sheet 10 in the first direction; obtaining a stack body 10' by stacking a plurality of ceramic green sheets in the first direction; a stack body cutting operation of cutting the stack body 10' in the second direction and the third direction to obtain a plurality of unit chips U1, in which during cutting in the third direction, the stack body 10' is cut to include a first internal electrode pattern in which a cut surface of a conductive pattern is exposed to one surface of the unit chip in the second direction and a second internal electrode pattern in which a cut surface of the conductive pattern is exposed to the other surface of the unit chip in the second direction, and when a separation distance between the conductive pattern and an adjacent conductive pattern in the third direction is defined as We, during cutting in the second direction, the stack body 10' is cut within the range of We in the third direction from centers C1 and C2 of a region in which the conductive pattern is spaced apart from the adjacent conductive pattern in the third direction, and the stack body 10' is cut so that the conductive pattern is spaced apart from at least one of first and second side surfaces of the unit chip opposing each other in the third direction; and a side margin portion forming operation of attaching a ceramic green sheet for a side margin portion to first and second side surfaces of the unit chip.

FIG. 10 illustrates a ceramic green sheet in which an internal electrode pattern used to manufacture a multilayer electronic component according to an example embodiment of the present disclosure is printed. FIG. 10 illustrates first and third cross-sections of a stack body obtained by stacking the ceramic green sheets of FIG. 9.

Referring to FIGS. 10 and 11, a method of manufacturing a multilayer electronic component according to an example embodiment of the present disclosure will be described.

First, as illustrated in FIG. 10, a plurality of conductive patterns 120 arranged in the second direction, perpendicular to the first direction, and a third direction, perpendicular to the first and second directions, may be formed on one surface of the ceramic green sheet 10 in the first direction.

The ceramic green sheet 10 does not need to be particularly limited, and the ceramic green sheet may be formed using ceramic powder particles. For example, the ceramic green sheet may be formed using a slurry including ceramic powder particles, an organic solvent, and a binder. Specifically, after adding additives to the ceramic powder particles, ethanol and toluene may be used as solvents and may be mixed with a dispersant, and then, a mixture thereof may be mixed with the binder, thereby forming the ceramic green sheet 10. The ceramic powder particles may be BaTiO₃-based ceramic powder particles, and may be, for example, BaTiO₃, and Ba₁₋ₓCaₓ)TiO₃(0<x<1), Ba(Ti_{1-y}Ca_{y})O₃(0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) which is formed by partially employing calcium (Ca) and zirconium (Zr) in BaTiO₃.

The method of forming the conductive pattern 120 is not particularly limited, and the internal electrode pattern 120 may be formed by applying a conductive paste for internal electrodes including a conductive metal, and a method of applying the conductive paste for internal electrodes may be a screen-printing method or a gravure printing method, but the present disclosure is not limited thereto. Meanwhile, the conductive patterns 120 may be included in the internal electrodes 121 and 122 after the sintering process, and some of the conductive patterns 120 may be included in additional patterns 141a, 141b, 142a and 142b.

Then, the stack body 10' may be obtained by stacking and pressing a plurality of ceramic green sheets 10 on which a plurality of conductive patterns 120 are formed in the first direction.

A cover portion may be formed by stacking ceramic green sheets 10 on which the conductive pattern 120 is not formed in an upper portion and a lower portion of the stack body 10' in the first direction.

Then, a stack body cutting operation may be performed in which the stack body may be cut in the second direction and the third direction to obtain a plurality of unit chips U1, but during cutting in the third direction, the stack body may be cut to include a first internal electrode pattern in which the cut surface of the conductive pattern is exposed to one surface of the unit chip in the second direction and a second internal electrode pattern in which a cut surface of the conductive pattern is exposed to the other surface of the unit chip in the second direction, and when the separation distance between the conductive pattern and the adjacent conductive pattern in the third direction is defined as We, during cutting in the second direction, the stack body may be cut within the range of We in the third direction from the centers of the region in which the conductive pattern is spaced apart from the adjacent conductive pattern in the third direction, but the conductive pattern may be cut to be spaced apart from at least one of the first and second side surfaces of the unit chip opposing each other in the third direction.

Referring to FIG. 11, during the cutting in the second direction, the centers of the region in which the conductive pattern is spaced apart from the adjacent conductive pattern in the third direction may be selected as the reference cutting lines C1 and C2, and the stack body 10' may be cut within the range of We in the third direction from the reference cutting lines C1 and C2. That is, when the reference cutting line on the left side of the unit chip U1 is defined as a first reference cutting line C1 and the reference cutting line on the right side of the unit chip U1 is defined as a second reference cutting line C2, during cutting from the left A1 of the first reference cutting line C1, the stack body may be cut within a range of WA1, and the size of WA1 may be less than or equal to We. Additionally, during cutting on the right B1 of the first reference cutting line C1, the stack body may be cut within the range of WB1, and the size of WB1 may be less than or equal to We. Similarly, during cutting on the left A2 of the second reference cutting line C2, the stack body may be cut within a range of WA2, and the size of WA2 may be less than or equal to We. Additionally, when cutting on the right B2 of the second reference cutting line C2, the stack body may be cut within the range of WB2, and the size of WB2 may be less than or equal to We.

When cutting the stack body 10' according to the reference cutting lines C1 and C2 of FIG. 10, the internal electrodes 121 and 122 may be spaced apart from the fifth and sixth surfaces of the body, and the internal electrodes 121 and 122 may be spaced apart from the side margin portions 114 and 115.

When dispersion occurs in the cutting process, the stack body 10' may not be cut accurately according to the reference cutting lines C1 and C2, and may be cut on the left A1 or on the right B1 of the first reference cutting line C1, and may be cut on the left A2 or on the right B2 of the second reference cutting line C2. Depending on the distribution of the cutting process, the multilayer electronic component according to an example embodiment of the present disclosure may have various forms as described above.

In an example embodiment, during cutting in the second direction, the stack body 10' may be cut at less than We/2 in the third direction in the center of the region in which the conductive pattern is spaced apart from the adjacent conductive pattern in the third direction. Accordingly, it may be possible to obtain a multilayer electronic component in a form in which both ends of the internal electrodes are spaced apart from the side margin portion, and to improve adhesive force between the side margin and the body as well as to improve moisture resistance reliability. Referring to FIG. 11, during cutting from the left A1 of the first reference cutting line C1, the stack body may be cut within the range of WA1, and the size of WA1 may be less than We/2, and during cutting on the right B1 of the first reference cutting line C1, the stack body may be cut within the range of WB1, and the size of WB1 may be less than We/2. Similarly, during cutting on the left A2 of the second reference cutting line C2, the stack body may be cut within the range of WA2, and the size of WA2 may be less than We/2, and during cutting on the right B2 of the second reference cutting line C2, the stack body may be cut within the range of WB2, and the size of WB2 may be less than We/2.

That is, during cutting in the second direction, the stack body may be cut so that the conductive pattern 120 may not be exposed to first and second side surfaces of the unit chip. The first side surface of the unit chip corresponds to the fifth surface of the body, and the second side surface of the unit chip corresponds to the sixth surface of the body.

In this case, the multilayer electronic component 100 illustrated in FIGS. 1 to 5 may be manufactured.

In an example embodiment, during cutting in the second direction, the stack body may be cut so that the conductive pattern may be exposed to one of the first and second side surfaces of the unit chip.

In this case, in order to expose the conductive pattern to the first side surface, the stack body may be cut within the range of WB1 on the right B1 of the first reference cutting line C1, and the size of WB1 may be We/2 or more or We or less. In this case, as illustrated in FIGS. 13, 17, and 19, the internal electrode may be exposed to the fifth surface.

Additionally, in order to expose the conductive pattern to the second surface, the stack body may be cut within the range of WA2 on the left A2 of the second reference cutting line C2, and the size of WA2 may be We/2 or more or We or less. In this case, as illustrated in FIGS. 12, 16 and 19, the internal electrode may be exposed to the sixth surface.

In an example embodiment, during cutting in the second direction, the stack body may be cut so that a conductive pattern adjacent to the conductive pattern is exposed to at least one side surface of the first and second side surfaces.

In this case, in order to expose the adjacent conductive pattern to the first surface, the stack body may be cut within the range of WA1 on the left A1 of the first reference cutting line C1, and the size of WA1 may be We/2 or more or We or less. In this case, the first additional pattern may be exposed on the fifth surface, as illustrated in FIGS. 15, 16 and 18.

Additionally, in order to expose the adjacent conductive pattern to the second side surface, the stack body may be cut within the range of WB2 on the right B2 of the second reference cutting line C2, and the size of WB2 may be We/2 or more and We or less. In this case, the second additional pattern may be exposed on the sixth surface, as illustrated in FIGS. 14, 17 and 18.

After the stack body cutting step, a side margin portion forming operation may be performed by attaching a ceramic green sheet for a side margin portion to the first and second side surfaces of the unit chip opposing each other in the third direction.

The ceramic green sheet for the side margin portion does not need to be particularly limited, and the ceramic powder particles may be used to form the ceramic green sheet for the side margin portion, and the ceramic green sheet used to form the stack body may also be used. For example, the ceramic green sheet may be formed using a slurry including the ceramic powder particles, the organic solvent, and the binder. Specifically, after adding additives to the ceramic powder particles, ethanol and toluene may be used as solvents and may be mixed with a dispersant, and then, a mixture thereof may be mixed with the binder, thereby forming the ceramic green sheet 10. The ceramic powder particles may be BaTiOs-based ceramic powder particles, and may be, for example, BaTiO₃, and (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) which is formed by partially employing calcium (Ca) and zirconium (Zr) in BaTiO₃.

Additionally, the ceramic green sheet for the side margin portion may have a higher Mg content than the ceramic green sheet used to form the stack body in order to improve bonding force with the stack body. In this case, the Mg content may refer to the number of moles of Mg relative to 100 moles of Ti.

Additionally, after sintering the unit chip to which the ceramic green sheet for the side margin portion is attached, external electrodes 131 and 132 may be formed on the third and fourth surfaces of the body 110 to obtain a multilayer electronic component.

The method of forming the external electrodes 131 and 132 is not particularly limited, and a method of dipping into a paste including a conductive metal and glass may be used, and the external electrodes 131 and 132 may also be formed by transferring a sheet including the conductive metal. Additionally, the external electrodes may be formed using a paste including a conductive metal and a resin, or using an atomic layer deposition (ALD) method, a molecular layer deposition (MLD) method, a chemical vapor deposition (CVD) method, and a sputtering method.

Additionally, a plating process may be additionally performed so that the external electrode includes plating layers 131b and 132b.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction;
side margin portions disposed on the fifth and sixth surfaces of the body, respectively; and
external electrodes disposed on the third and fourth surfaces of the body, respectively,
wherein at least one of two ends of the internal electrodes in the third direction is spaced apart from the corresponding side margin portion and has an average thickness smaller than an average thickness of a central portion of the internal electrodes in the third direction.

2. The multilayer electronic component according to claim 1, wherein when an end closer to the fifth surface of the body is defined as a first end, and an end closer to the sixth surface of the body is defined as a second end, among the two ends of the internal electrodes in the third direction, the first end is spaced apart from the fifth surface of the body, and the second end is in contact with the sixth surface of the body.

3. The multilayer electronic component according to claim 2, wherein the body further includes a first additional pattern in contact with the fifth surface of the body and spaced apart from the first end.

4. The multilayer electronic component according to claim 3, wherein an end closer to the first end, among both ends of the first additional pattern in the third direction, and the first end of the internal electrodes have a shape bent toward a center of the body in the first direction.

5. The multilayer electronic component according to claim 3, wherein in the first additional pattern, a thickness of a portion in contact with the fifth surface of the body is larger than a thickness of an end closer to the first end.

6. The multilayer electronic component according to claim 1, wherein both ends of the internal electrodes in the third direction are spaced apart from the respective side margin portions.

7. The multilayer electronic component according to claim 6, wherein when, among the two ends of the internal electrodes in the third direction, an end closer to the fifth surface of the body is defined as a first end, and an end closer to the sixth surface of the body is defined as a second end, the body includes at least one of:
a first additional pattern in contact with the fifth surface of the body and spaced apart from the first end; or
a second additional pattern in contact with the sixth surface of the body and spaced apart from the second end.

8. The multilayer electronic component according to claim 7, wherein an end closer to the first end among both ends of the first additional pattern in the third direction, an end closer to the second end among both ends of the second additional pattern in the third direction, and the first end and the second end of the internal electrodes have a shape bent toward a center of the body in the first direction.

9. The multilayer electronic component according to claim 7, wherein in the first additional pattern, a thickness of a portion in contact with the fifth surface of the body is larger than a thickness of an end closer to the first end, and
in the second additional pattern, a thickness of a portion in contact with the sixth surface of the body is larger than a thickness of an end closer to the second end.

10. The multilayer electronic component according to claim 1, wherein, when a region between an end of the internal electrodes spaced apart from an adjacent one of the side margin portions and the adjacent one of the side margin portions in the third direction is defined as a margin region, the adjacent one of the side margin portions and the margin region have different compositions from each other.

11. The multilayer electronic component according to claim 1, wherein, when a region between an end of the internal electrodes spaced apart from an adjacent one of the side margin portions and the adjacent one of the side margin portions in the third direction is defined as a margin region,
an average size of dielectric grains included in the adjacent one of the side margin portions is smaller than an average size of dielectric grains included in the margin region.

12. The multilayer electronic component according to claim 1, wherein, when a size of dielectric grains adjacent to an end of the internal electrodes spaced apart from the side margin portion is defined as Gs1, a size of dielectric grains adjacent to the central portion of the internal electrode is defined as Gs2, and a size of dielectric grains of a region adjacent to an outer surface of the side margin portion is defined as Gs3, a difference between Gs1 and Gs2 is smaller than a difference between Gs1 and Gs3.

13. The multilayer electronic component according to claim 1, wherein at least a portion of one of the side margin portions is disposed on the first and second surfaces of the body.

14. The multilayer electronic component according to claim 1, wherein, when one of the internal electrodes is divided into 10 regions having equal intervals in the third direction, which are defined as first to tenth regions, respectively, the two ends of the internal electrodes in the third direction refer to the first region and the tenth region, respectively, and the central portion of the internal electrodes refers to the second to ninth regions.

15. The multilayer electronic component according to claim 1, wherein at least one of the two ends of the internal electrodes in the third direction has a shape bent
toward a center of the body in the first direction.
